(19) **Europäisches Patentamt / European Patent Office / Office européen des brevets**

(11) **EP 2 944 934 A2**

(12) # EUROPEAN PATENT APPLICATION

(43) Date of publication:
**18.11.2015 Bulletin 2015/47**

(51) Int Cl.:
***G01K 17/06*** (2006.01)

(21) Application number: **15164560.3**

(22) Date of filing: **21.04.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: **15.05.2014 US 201414278266**

(71) Applicant: **Palo Alto Research Center Incorporated**
**Palo Alto, California 94304 (US)**

(72) Inventor: **Smullin, Sylvia J.**
**Menlo Park, CA 94025 (US)**

(74) Representative: **Lord, Michael**
**Gill Jennings & Every LLP**
**The Broadgate Tower**
**20 Primrose Street**
**London EC2A 2ES (GB)**

(54) **COMPUTER-IMPLEMENTED METHOD FOR EXTERNALLY ASSESSING A BUILDING'S SUSCEPTIBILITY TO HEAT LOADS**

(57)  Usage data of an indoor climate control system for a building is obtained. To determine system susceptibility to infiltration, the infiltration parameter per unit effective leak area is determined. To determine system exposure to insolation, an insolation parameter per unit area is determined. To determine thermal isolation of the building, ambient temperature data is obtained for a time period of interest. A fit of the relevant data is performed. A large positive infiltration regression coefficient with minimal error is interpreted as indication of a significant infiltration load. Either a large positive insolation regression coefficient with minimal error for cooling or a large negative insolation regression coefficient with minimal error for heating is interpreted as indications of significant heat load due to insolation. For thermal isolation, a large positive temperature coefficient is interpreted as poor insulation or isolation against temperature-driven thermal loads.

FIG. 4

**Description**

**Field**

This application relates in general to indoor climate control within a building, and in particular, to a computer-implemented system and method for externally assessing a building's susceptibility to heat loads, such as caused by conduction, infiltration, and insolation.

**Background**

Systems to control indoor climate are commonly found in residential, commercial, retail, and industrial buildings. Whether in the form of a dedicated cooling- or heating-only system, or a combined heating, ventilation and air conditioning (HVAC) system, indoor climate control systems serve two main purposes. First, these systems help maintain thermal comfort for occupants of a building by heating, cooling, or ventilating air within a structure relative to ambient temperatures and conditions. Second, these systems help to improve air quality through filtration of airborne particulates, provide isolation from outdoor environments, and, especially for air conditioners, remove humidity from the air.

Indoor climate control system usage contributes significantly to the energy consumption of a building. From the perspective of an energy consumer, running an indoor climate control system less frequently can have a direct effect on reducing the overall amount and cost of energy used. System usage can be decreased by direct changes initiated by the consumer, whether by choosing a thermostat set point appropriate to occupant needs or by, for instance, closing window shades against the summer sun. System usage can also be decreased indirectly through structural improvements that address sources of increased indoor climate control system load. Sources of increased indoor climate control system load include ineffective sealing and excessive ventilation that lead to a significant infiltration of air from outside of the building to indoors, poor overall thermal isolation of the indoors from the outdoors, and, in the case of cooling, a high degree of exposed fenestration that can subject a building's interior to excessive direct insolation.

Power utilities may also be under a mandate to urge consumers to reduce the amount of energy used in an effort to balance an ever-increasing demand for more energy. Further, lowering consumer energy consumption may simply make good fiscal sense, for example, to help a utility save on or defer capital expenditures for building new power generation plants, running transmission lines, and upgrading infrastructure. Power utilities frequently urge consumers to reduce energy consumption through educational and compensatory outreach programs, which can include incentives, rebates, rewards, education, and other forms of consumer offerings. For example, some power utilities offer rebates to incent consumers to make structural changes, such as switching to compact fluorescent lights or increasing thermal insulation. Problematically, such rebates may not always be awarded to consumers who would benefit the most. Rebates are more effective at lowering energy consumption when used to incent structural or behavioral changes that actually result in significant energy savings. Thus, a power utility has an opportunity to more efficiently achieve a given reduction in energy consumption by offering incentives first to those consumers who have the most opportunity to make an impactful change, rather than offering incentives equally to all consumers on a first-come, first-served basis.

Energy outliers, that is, consumers who use considerably more energy than neighboring or comparable consumers, are better targets for energy reduction incentives, although they may be unaware of their outlier status or of what changes are needed to help reduce their energy consumption. Energy audits can help prioritize the changes necessary to become more energy efficient, but energy audits are often costly. Moreover, energy audits can fail to account for how human behavior and the operation of an indoor climate control system can vary over time. A blower door test in an audit, for example, can point to imperfect sealing around doors and windows; the audit will not indicate if a household member regularly leaves doors and windows open during the summer while the air conditioner is running. Moreover, monitoring consumers for reductions in energy consumption after changes have been made is difficult. Energy usage must be measured over long time periods, and weather, behavioral, and structural factors bearing on energy usage must be deconvoluted from the energy usage measurements to correlate energy reduction incentives to realized energy savings. Without visibility into or understanding of all these compounding factors that determine energy usage, any "savings" attributed to rebate programs may actually just be deemed savings, rather than true savings directly measured or assessed.

As used herein, an "energy outlier" is a consumer who uses more energy for indoor climate control than other comparable consumers, where the comparison may include a normalization for size of house, cooling degree days or heating degree days, the number of occupants, or other information. A consumer that uses more energy for indoor climate control in a house than most other consumers may be using more energy due to an extraordinary thermostat set point, malfunctioning or poor placement of the thermostat, malfunctioning of the indoor climate control system due to poor maintenance or other failure, incorrect indoor climate control system sizing, poor thermal insulation, large effective leak area or other sources of infiltration between the building and outside, large unshaded or uncovered areas of windows or other exposures to direct insolation bearing upon the interior of the house, high internal loads due to occupants and appliance usage, or other reasons.

Understanding of the factors affecting the relative thermal performance of houses and their indoor climate control system usage can be used to improve the targeting and post-award assessment of incentive programs intended to reduce energy consumption for indoor climate control. The recipients of incentive programs will generally be the person or entity most directly connected with being able to actually use the form of incentive offered, and not the building or house proper. For example, a homeowner living in his house who is also a consumer of a power utility is usually responsible for setting the thermostat in his house. If the house has a very low thermostat set point during a summer cooling season, incenting that consumer to change the thermostat set point may be cheaper and more effective than incenting that same consumer to blow new insulation into the walls, which he, as a homeowner, could do. In contrast, only the owner of an apartment building would likely be able to make structural changes to the building, rather than any tenants or his property management company, which generally only maintains and repairs, and does not ordinarily replace or upgrade, building indoor climate control systems and structure, like indoor climate control systems or wall insulation, or other capital improvements.

Conventionally, energy audits are used to figure out which heating and cooling loads are most responsible for a consumer's indoor climate control system usage. During an energy audit, a contractor will physically inspect a building's construction or obtain structural details of the building, and then may apply industry agreed-upon guidelines for calculating the heating or cooling load based on a building's type and structure and the type of proposed indoor climate control system, such as forth in H. Rutkowski, Manual J Residential Load Calculation, Vol. 2 (8th Ed. Nov. 2011) ("Manual J"), and the 2012 ASHRAE Handbook, HVAC Systems and Equipment, SI Ed. (2012) ("ASHRAE Handbook"). Energy audit findings can help determine, for instance, whether an energy outlier has poor insulation, lots of unshaded windows, or poor sealing. However, identifying those structural aspects of a building that may be causing increased indoor climate control system usage, specifically, significant infiltration, poor overall thermal isolation, and, in the case of cooling, a high degree of exposure to insolation, such as via unshaded or uncovered transparent fenestration, without the degree of specificity afforded by an energy audit by physical inspection and structural plans remains an open problem. Moreover, behavior, such as opening and closing blinds or windows, can impact the load on a heating or cooling system and this type of behavior is not captured in an audit, as an audit is an assessment taken at only one moment in time.

Knowledge of potential behavioral and structural energy consumption-related concerns is crucial for understanding energy use for indoor climate control; narrowing the set of possible reasons for increased energy consumption can facilitate better targeting of energy reduction incentives via understanding of underlying causation, whether behavioral or structural. A comparison of potential energy inefficiencies in different buildings relating to infiltration, thermal isolation, and, in the case of cooling, unshaded or uncovered transparent fenestration can further understanding of why one building may use more energy for indoor climate control than another building. Knowledge of specific occupant behaviors that cause increased indoor climate control use, such as leaving windows open when the air conditioning is running or leaving shades open when the sun is shining into the house, and exact measurements of building structure would provide the most information on understanding energy consumption; however, for making a qualified comparison between buildings, a less quantitative assessment can be useful, sufficient, and more readily-available.

Therefore, there is a need for an approach to providing an indirect and robust form of identifying possible causes of increased indoor climate control system usage in a building of a structural nature in situations where comparisons rather than predictions are important and quantitative accuracy is neither needed nor easily achieved.

## Summary

Usage data of an indoor climate control system, such as an HVAC system, for a building, for a time period of interest is obtained, with a time resolution that reflects the physically relevant time scales. The data are formed into a usage time series. Ambient weather data for the same time period is obtained to form a time series of weather-dependent loads due to infiltration, including humidity, insolation, and temperature. To determine load on the indoor climate control system due to infiltration, the infiltration parameter per unit effective leak area is determined for the building, such as by referring to ambient weather conditions. To determine system load due to insolation, an insolation parameter is determined from ambient weather conditions for the building. Ambient temperature data represents an overall thermal load on the building.

A fit of the relevant data is performed by setting the usage data as the dependent variable to which the infiltration load, insolation load, or ambient temperature data, as applicable, are linearly fit, either separately or in some combination. Other loads or, more generally, parameters could also be included in the fit. In this context, a linear fit constitutes a regression analysis in which the estimated relationship between the dependent variable and one or more independent variables is substantially linear in the dependent variables, and other terms in the estimated relationship, besides a constant term and the substantially linear terms, are smaller in magnitude or negligible. A fit could be, for instance, an ordinary least squares linear regression, a frequentist regression, a Bayesian regression, or a robust regression. The cooling or heating power of the indoor climate control system may be considered in the fit, including through incorporation into the calculation of the usage time series, normalization of a time series before the fit, or normalization of the coefficients that result from the fit.

The coefficients that result from the fit are used to evaluate the significance of a given load in determining the energy consumption by the indoor climate control system in the building and to evaluate one building's thermal performance in comparison to the thermal performance of other buildings. A large positive regression coefficient of the infiltration load with minimal error is interpreted as an indication of significant infiltration load into and ineffective sealing of the building. Either a large positive regression coefficient of the insolation load with minimal error for cooling or a large negative regression coefficient of the insolation load with minimal error for heating are interpreted as indications of a significant amount of heat load due to insolation on the building. A large temperature coefficient is interpreted as an indication of poor thermal isolation of the building indoors from the environment.

One embodiment provides a computer-implemented system and method for externally assessing susceptibility of a building to heat load from infiltration. A usage time series that reflects usage of an indoor climate control system in a building over a plurality of operational cycles over a plurality of time periods is obtained. In each operational cycle, the running time includes the time necessary for the indoor climate control system to bring the building's interior temperature into a temperature range defined about a desired indoor temperature for the building. An infiltration parameter per unit effective leak area of the building on the indoor climate control system is assessed from ambient weather conditions, which could include humidity, as measured over the same time periods. A linear regression of the usage time series is performed against the infiltration parameter. A large positive regression coefficient of the infiltration parameter with minimal error is interpreted as an indication of significant infiltration load into and ineffective sealing of the building.

A further embodiment provides a computer-implemented system and method for externally assessing susceptibility of a building to heat load from insolation. A usage time series that reflects usage of an indoor climate control system in a building over a plurality of operational cycles over a plurality of time periods is obtained. In each operational cycle, the running time includes the time necessary for the indoor climate control system to bring the building's interior temperature into a temperature range defined about a desired indoor temperature for the building. An insolation parameter per unit area on the building from weather conditions that create insolation as measured over the same time periods is assessed. A linear regression of the usage time series is performed against the insolation parameter per unit area. Either a large positive regression coefficient of the insolation parameter per unit area with minimal error for cooling or a large negative regression coefficient of the insolation parameter per unit area with minimal error for heating are interpreted as indications of a significant amount of heat load due to insolation on the building.

A still further embodiment provides a computer-implemented system and method for externally inferring quality of overall thermal isolation of a building. A usage time series that reflects usage of an indoor climate control system in a building over a plurality of operational cycles over a plurality of time periods is obtained. In each operational cycle, the running time includes the time necessary for the indoor climate control system to bring the building's interior temperature into a temperature range defined about a desired indoor temperature for the building. A temperature time series for the temperature ambient to the building is obtained over the same plurality of the operating cycles over the time periods. A linear regression of the usage time series is performed against the temperature time series. A large positive coefficient with minimal error is interpreted as an indication of poor thermal isolation, for example, via insulation, of the building interior from the outdoors.

While an energy audit benefits from access to lots of detailed information about a building, the goal here is to deduce what is possible with a limited set of information about a house, specifically, usage data of the indoor climate control system and weather information for the same time period.

The foregoing approach fundamentally gets at *why* one building might be using more energy for indoor climate control system usage than others by narrowing the set of possible reasons and showing which of the buildings might have significant infiltration, poor overall thermal isolation, and, in the case of cooling, a high degree of unshaded or uncovered fenestration. The comparison between houses of inferred structural and behavioral aspects affecting infiltration, thermal isolation, and insolation exposure could be used in conjunction with other comparisons of thermal performance of house or occupant behavior to determine which houses would most likely benefit from what incentives being provided to their owner, occupant, or responsible party. If a power utility wants to offer rebates or incentives related to structural upgrades to the owner, occupant, or responsible party, the utility might, for example, choose to make the offer first to those owners, occupants, or responsible parties of houses with inferred structural concerns that negatively affect indoor climate control system usage.

In addition to being used to select which owner, occupant, or responsible party of a house to receive a particular incentive, the foregoing approach could further be used as part of a study of a group of houses, including identifying the top reasons why one house uses more energy than others and choosing the best incentives for the owner, occupant, or responsible party of that house. If a power utility wants to offer an incentive to the owner, occupant, or responsible party of one house to make some behavioral or structural change, the foregoing approach could be used to choose what kind of behavioral or structural change to incent for that one house, such as better sealing, remediating unintended ventilation and shading fenestration, by way of their owner, occupant, or responsible party.

Finally, the foregoing approach could be used to monitor the impact of any energy efficiency program by making the same comparison before and after any incentive program to the owner, occupant, or responsible party of a building has been implemented.

Still other embodiments of the present invention will become readily apparent to those skilled in the art from the following detailed description, wherein is described embodiments of the invention by way of illustrating the best mode contemplated for carrying out the invention. As will be realized, the invention is capable of other and different embodiments and its several details are capable of modifications in various obvious respects, all without departing from the spirit and the scope of the present invention. Accordingly, the drawings and detailed description are to be regarded as illustrative in nature and not as restrictive.

## Brief Description of the Drawings

FIGURE 1 is a functional block diagram showing factors affecting the operation of an indoor climate control system in a house.

FIGURES 2 and 3 are graphs respectively showing, by way of examples, cooling power and heating power as functions of indoor temperature.

FIGURE 4 is a flow diagram showing a computer-implemented method for externally assessing susceptibility of a building to heat loads, in accordance with one embodiment.

FIGURE 5 is a flow diagram showing a routine for processing time series data for use in the method of FIGURE 4.

FIGURE 6 is a block diagram showing a computer-implemented system for externally assessing susceptibility of a building to heat loads, in accordance with one embodiment.

## Detailed Description

An "energy outlier" is a consumer of a power utility who uses considerably more energy for indoor climate control system operation than neighboring or comparable consumers under similar ambient temperatures and weather conditions. There are many reasons why a consumer may be an energy outlier for indoor climate control system usage. For air conditioning, the reasons may be due to an overly-low thermostat set point; an overly-high internal thermal load due to high occupancy, lots of cooking activity, or large numbers of appliances turned on; a leaky house due to poor insulation or excessive ventilation; fenestration exposed to significant direct insolation; poor overall thermal isolation; or some other reason.

Understanding why energy outliers are outliers can help a power utility in deciding which incentives or education to offer to what consumers. Power utilities in the residential energy market lack sufficient tools for designing rebate or other incentive offerings and for verifying the impact of their offerings on energy consumption. The discussion that follows provides a power utility with a set of tools that can be used to identify and narrow the set of reasons underlying why a consumer is an energy outlier, so as to help choose energy reduction incentives to offer to encourage structural or behavioral changes. For example, does the house of an energy outlier have ineffective insulation? Poorly-controlled ventilation? Lots of unshaded windows? Although a detailed energy audit can answer some of these questions, the goal here is to deduce what is possible with a limited set of information about the house, specifically, usage data that indicates when the indoor climate control system is running, information about the heating or cooling power of the indoor climate control system, and weather information for the same time period as the usage data.

These same tools can be used to choose those consumers of a power utility to whom to offer a particular incentive by narrowing the set of consumers that are most likely to receive maximal energy reduction benefit from an incented change. Much of the discussion is presented in the context of energy use for cooling with air conditioning; however, except as specifically related to humidity, the discussion can equally be applied *mutatis mutandis* to energy use for heating or other forms of indoor climate control that involve the use of a thermostat or other temperature-based control system. For a heating system, as opposed to a cooling system, some of the mathematical signs of various terms in the analysis will be reversed. For example, the sign of the heating power is opposite to the sign on the cooling power. Energy usage for air conditioning is expected to increase with increasing temperature and with insolation load, while energy usage for heating is expected to decrease with increasing temperature and increasing insolation load. Finally, if both cooling and heating are being considered in the same analysis, a change-point model may need to be introduced. Specifically, if within one analytical timeframe, the ambient temperature fluctuates significantly enough to require both air conditioning and heating, a change-point model will be needed to reflect that there are distinct periods of time within the timeframe during which the air conditioner is running, during which the heater is running, and when neither the air conditioner nor heater are running. The change-point marks the transition either from heating to cooling or from cooling to heating, or from heating or cooling to periods without temperature control, with the sign of the heating power treated as being opposite to the sign on the cooling power.

Energy usage is directly related to the running time of an indoor climate control system. In turn, running time and efficient operation are related through thermostat set point, system sizing, thermostat set point adjustment, and other factors. Knowledge of an indoor temperature is crucial for understanding a building's energy use for indoor climate control; such understanding is a key determinant of the amount of heat that needs to be added by a heater or removed by an air conditioner. An effective thermostat set point, as a surrogate of indoor temperature, can be externally inferred based on system usage and ambient temperature data, such as described in commonly-assigned U.S. Patent application, entitled "Computer-Implemented System and Method for Externally Inferring an Effective Indoor Temperature in a Building," Serial No. 14/228,207, filed March 27, 2014, pending, the disclosure of which is incorporated by reference. In addition, an indoor climate control system may run less efficiently upon being turned on, and thus the overall efficiency will be greater when the running times are longer and the system cycles fewer times. The apparent sizing of the system can also be extrinsically inferred, such as described in commonly-assigned U.S. Patent application, entitled "Computer-Implemented System and Method for Externally Evaluating Sizing of an Indoor Climate Control System in a Building," Serial No. 14/228,209, filed March 27, 2014, pending, the disclosure of which is incorporated by reference. Finally, the efficiency contributions of an appropriate thermostat set point, proper system sizing, and other factors can be negated through inefficient indoor climate control system usage; regular adjustment of thermostat set point in response to actual thermal comfort need can significantly contribute to efficient indoor climate control system operation. Patterns of thermostat set point adjustment can also be externally inferred, such as described in commonly-assigned U.S. Patent application, entitled "Computer-Implemented System and Method for Externally Evaluating Thermostat Adjustment Patterns of an Indoor Climate Control System in a Building," Serial No. 14/228,211, filed March 27, 2014, pending, the disclosure of which is incorporated by reference.

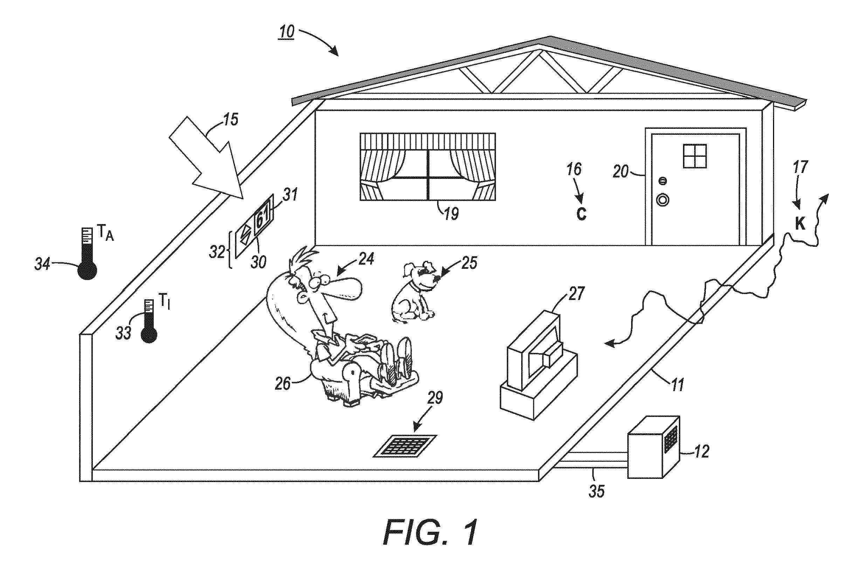

Occupant behaviors that cause increased indoor climate control use, such as leaving windows open when the air conditioning is running or leaving shades open when the sun is shining into the house, structural deficiencies, like inadequate sealing, excessive ventilation, sunlight-exposed windows and openings, and poor thermal isolation may raise energy consumption-related concerns. Knowledge of such concerns is crucial for understanding a building's energy use for indoor climate control; narrowing of possible reasons for increased energy consumption can facilitate better targeting of energy reduction incentives. Indoor climate control system usage is influenced by several factors. FIGURE 1 is a functional block diagram showing factors 10 affecting the operation of an indoor climate control system 12 in a house 11. Although described herein with specific reference to a house 11, the same or similar factors affect the operation of other types of buildings and structures, including apartments, condominiums, townhouses, commercial buildings, industrial buildings, and so forth, except as otherwise noted.

Indoor temperature 33, as reflected by a thermostat set point ($T_0$) 31, is one factor affecting indoor climate control system running time and, therefore, the amount of energy used for indoor climate control, particularly during the cooling and heating seasons. Thermostat setpoint 31 and the reasons underlying system usage to maintain that temperature can also provide an explanation as to why some houses may use more energy for indoor climate control than their neighbors, peers, or comparable consumers. Herein, the terms neighbors, peers, and comparable consumers can be used interchangeably.

For purposes of discussion, operation of the indoor climate control system 12 of the house 11 is assumed to be controllable via the thermostat 30, or similar indoor controller that measures indoor temperature, which provides a temperature controlling component to the indoor climate control system 12, and regulates the On- and Off-cycling of the system components between running and at idle (or on standby) to maintain the indoor temperature around the thermostat set point 31. The thermostat 30 will be assumed to control only one climate-controlled zone and one climate-control system, in comparison to buildings that have multiple zones or multiple climate-control systems, although the same inferences described herein would, by extension, similarly apply to such configurations. The thermostat set point 31 can be manually adjusted from within the house 11 by the occupants using controls 32 provided with the thermostat 30, automatically adjusted by a thermostat that learns occupant behavior, can be set to change on a timer, or could respond to other conditions, such as indoor humidity or occupancy. As well, the thermostat set point 31 may also be adjustable from outside of the house 11 by other people using controls that are remotely interfaceable to the indoor climate control system 12, such as performed centrally by a facilities manager in charge of campus-wide climate control, or by a smart thermostat that includes wireless capabilities that allow remote control via a smartphone or other device. Other thermostat set point 31 modes of adjustment or operation are possible.

Data showing usage of an indoor climate control system must be available for the house 11, specifically the times at which the system is running. Information about the cooling or heating power of the indoor climate control system must also be available. This information may come from an indication of the fuel usage or power draw of the system while running or may come from other sources, such as an audit report or estimates based on industry standards.

Weather data, including ambient temperature information, for the same time period as covered by the indoor climate control system usage data must also be available for a geographic area that includes or represents the location of the house 11. Weather impacts many of the loads on an indoor climate control system via thermal conduction from indoors to outdoors, insolation from sunlight entering through exposed windows and openings, infiltration of air through ineffectively sealed openings, and other factors.

One way of narrowing the set of reasons why an energy outlier might be an outlier is to look for the dependence of daily air conditioner energy usage on these weather parameters, as natural variations in weather provide continually-varying experiments on each building. Weather data for a day may include hourly assessments of outdoor dry bulb temperature, sol-air temperature, temperature measured on the building envelope, specific humidity, wind speed, wind direction, and cloud cover. Weather data may be assessed by sensors directly at the house or inferred from measurements made at a location nearby or representative of the location of the house. Other types of weather data are possible.

These weather parameters may impact the cooling or heating load on a house 11. The finite thermal mass present inside the house 11 may cause a delay between the time that weather conditions outside change and the time that the effects of the change manifests inside the house 11. There may be different delay times for different types of loads. For example, cloud cover early in the day may dissipate by late morning and develop into sunny weather in the afternoon, but the interior of the house 11 may not actually begin to heat up until a few hours after the sun breaks through the clouds. Notwithstanding such on-going changes in ambient weather conditions, summing indoor climate control usage over an appropriate time period, such as 24 hours, can make specific knowledge of such delays unnecessary.

The pressure difference between the indoors and outdoors, as determined by temperature difference and wind speed, determines the infiltration air flow into a house. Air can flow in through unintentional leaks, such as open fireplace flues and gaps around door frames and in the walls and ceiling; open windows and doors; and through any intentional ventilation sources. The increased cooling (and heating) load presented by this air flow depends upon the temperature and, mainly for air conditioning, the humidity of the outside air with respect to the inside air.

Direct insolation creates a heat load on the building envelope most directly through fenestration that permits sunlight to pass and which is exposed to the sun; the amount of direct insolation on an unshaded surface is determined by latitude, longitude, solar time, optical depth through the atmosphere, and the orientation of the surface. Reflection off of surrounding surfaces can also create an indirect insolation load. The amount of direct insolation is reduced by cloud cover and seasonal changes in the sun's declination. Insolation that is transmitted into the interior of house will be absorbed by surfaces in the interior of the house and will become a heat load in the house. The amount on insolation transmitted through a window depends upon the material properties of the window and any interior or exterior shading on the window, for example, via overhangs or curtains, such as described in the ASHRAE Handbook, cited *supra*.

All other factors being equal, a house 11 with a lot of unshaded windows or other exposed openings will have a higher cooling load on a sunny day than on a cloudy day, even if the ambient temperature is the same, due to the direct insolation absorbed by surfaces in the interior of the house 11 through the windows and openings. That same house 11 will have a higher cooling load on a very humid day, than on a very dry day of the same temperature, as the air conditioner is tasked with the latent cooling load from the infiltration of the hot and humid air. In either case, the higher cooling load should manifest as a longer air conditioner running time on a particular day and a higher total amount of energy usage by the air conditioner on that day.

Information about indoor climate control system usage must be separated from other energy usage in a house. For an air conditioner, which is generally expected to have cooling power and coefficient of performance (COP) that vary with ambient temperature, the usage time series may have different trends than the power or total energy draw that is commonly used in other analyses; for an electric resistive heater, the amount of energy drawn is expected to be close to being directly proportional to the time that the heater is turned on.

Indoor climate control system usage data can be derived from various sources. For instance, many power utilities are currently installing "smart" power meters that monitor energy usage at 1-hour or 15-minute time resolutions. Monitoring at still higher time resolutions, such as at one-minute intervals, can be one way of indirectly determining with even higher resolution when an air conditioner runs and goes to idle or standby in a house 11 over the course of a cooling season. Air conditioner operating cycles in houses are often on the order of 5-20 minutes in duration. A disaggregation algorithm would need to be applied to the smart meter data to separate-out air conditioning usage.

Smart meters and disaggregation algorithms can provide new data streams to power utilities and other users, enabling analysis tools, such as described herein. Still other sources of indoor climate control system usage data are possible, including a meter that monitors the electrical current to an air conditioning circuit alone, a sensor that monitors air flow in the duct work, a sensor that measures the vibration of the air conditioning when running, and usage reported by smart thermostats. The total amount of electricity, gas, or other fuel used over a period of time for an indoor climate control system can also be used as a proxy for the fraction of time that a system is running, even if usage is not monitored with a time resolution that is high enough to distinguish the exact minute during which the climate control system cycles runs or goes to idle or standby. The fidelity of this approximation depends on how much the efficiency of the indoor climate control system varies with ambient temperature and the time resolution at which fuel use is monitored.

The heating or cooling power of an indoor climate control system can be derived from various sources. An energy audit or survey can provide the manufacturer's rating for the system. The power draw, as electric power or as represented by usage of another fuel, such as natural gas, of the indoor climate control system can be used as a proxy for heating or cooling power when there is information or an assumption about the efficiency or coefficient of performance (COP) of the system. The heating or cooling power may also be assumed based on standards, conventions, or knowledge about local norms, such as a rule-of-thumb for the amount of cooling power generally needed for a home of a certain size or location.

Throughout the day, several factors 10 can affect the operation of an indoor climate control system 12. These factors include the heat capacity $C$ (16) of the house 11, the thermal conductance $K$(17) of the house 11 between indoors and outdoors, interior heat load $Q_{in}$ generated within the house 11, and non-temperature-driven heat load $Q_{out}$ from outside the house 15. Sources of heat load $Q_{in}$ include the heat generated by people 24, pets 25, furnishings 26, and operating appliances 27 or machinery located in the house 11, which can cause the heat load $Q_{in}$ to continually change. External heat loads that are not related to the temperature difference between indoors and outdoors include, in the case of air conditioning, the latent load due to infiltration of humid air. Loads due to radiation from the sun, that is, insolation on the building envelope, and radiative coupling of the house 11 to the environment may be included in either $Q_{out}$ or may be coupled into a term proportional to the temperature difference. Solar radiation may also be incorporated into the model, using knowledge or assumptions about the building type, structure, and location, by using the sol-air temperature as the ambient temperature, instead of the outdoor dry bulb temperature, such as described in the ASHRAE Handbook, cited *supra*.

In addition, in the case of air conditioning, ambient temperature that is higher than the indoor temperature creates a load via thermal conduction from outside to inside. In the case of heating, ambient temperature that is lower than the desired indoor temperature is of importance. The ambient temperature also creates a load via infiltration when leaks in the house, ventilation systems, open doors or windows, or chimneys allow outdoor air to come inside a house. Radiation between the surroundings, including the ground, the sky, and the entirety of the outdoor environment, also create a means for heat exchange between the outdoors and the building envelope, with further heat exchange between the building envelope and the indoor air determining the load on the interior of the house.

In the simplified model described herein, the effective thermal conductance $K$ can encompass all temperature-dependent sensible heat transfer between the indoor and outdoor environment through the building envelope due to conduction, infiltration, convection, and radiation, which, in some cases, may be appropriately linearized. The thermal conductance $K$ determines the temperature-dependent heat transfer between the interior of the house 11 at temperature $T$ (33) and the ambient temperature outside of the house $T_A$ (34). In this model, there is no consideration of spatial variation of $T$ or $T_A$, and no explicit convective or radiative heat transfer. More generally, thermal conductance $K$ can be considered to be an overall heat loss coefficient that reflects the isolation properties of the building envelope; a building with a high thermal conductance $K$ has poor thermal isolation from the environment and a building with low thermal conductance $K$ is well-isolated from the environment.

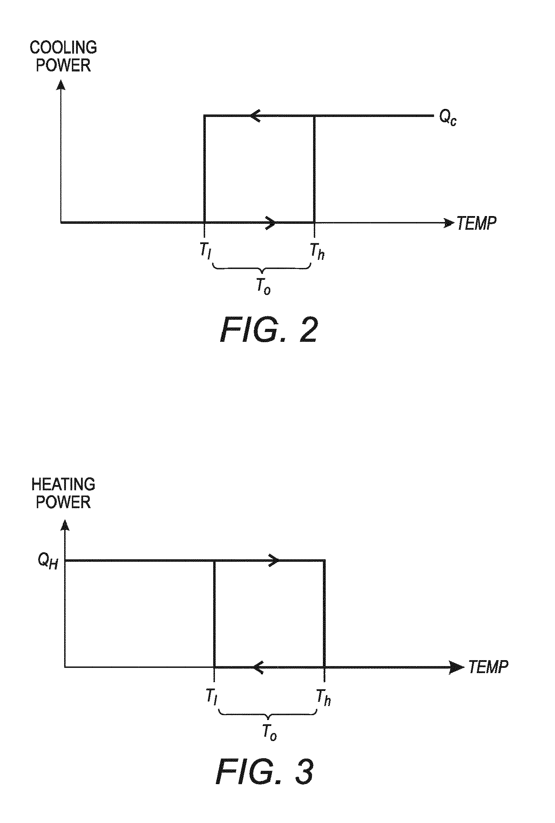

In the model, the thermostat 30 of the house 11 is set to maintain the interior temperature 33 at $T = T_0$, where $T_0$ is the set point chosen for the thermostat 30. The thermostat 30 operates using a "deadband." FIGURES 2 and 3 are graphs respectively showing, by way of examples, cooling power (for air conditioning) and heating power (for heating) as functions of indoor temperature. For simplicity, any variations in system cooling power or heating power with temperature are ignored in the graphs, which are intended to convey a simple version of a thermostat control scheme. To avoid constant cycling between running and at idle (or on standby) modes, most thermostats operate using a "deadband" that begins at a temperature $T_l$ slightly below and ends at a temperature $T_h$ slightly above the thermostat set point $T_0$. An indoor climate control system will start running when the indoor temperature falls below the deadband (for heating) or rises above the deadband (for cooling). Obversely, the system will go to idle or standby when the indoor temperature rises above the deadband (for heating) or falls below the deadband (for cooling). Though indoor climate control systems may have control schemes that are more complicated, this deadband model captures the most important features of thermostat operation.

Referring back to FIGURE 1, more precisely, an air conditioning system will start running when $T \geq T_h = T_0 + dT_h$ and will go to idle or standby when the AC when $T \leq T_l = T_0 - dT_l$, where $dT_h$ and $dT_l$ are upper and lower offsets that define the deadband of the thermostat 30, and $T_0$ is the thermostat set point. In an indoor climate control system, this deadband may be set in the thermostat alone, in some other component of the system, or by a combination of settings in the thermostat and one or more other components of the system. This behavior may also be called *hysteresis* in the system, and, in this context, the deadband may also be called a *hysteresis band* or the tolerance of a thermostat. The mechanical device that accomplishes this effect may be, for example, an anticipator in an analog thermostat or a control built into a microprocessor in a digital thermostat.

The duration of the running time of an air conditioner depends on its cooling power, the sum of the loads, the thermal properties of the building, and the size of the deadband. The sizing of the indoor climate control system refers to the comparison of the cooling power (for an air conditioner) or the heating power (for a heater) in relationship to the loads experienced. In the simple model described herein, the thermal load into the house 10 when the air conditioning goes to idle or standby is a sum of the heat load across the envelope determined by the thermal conductance $K$ and the temperature difference between outside and inside and all other loads $Q$, where $Q = Q_{in} + Q_{out}$. The rate of change of the internal temperature with time $\dot{T}$ is determined by the heat capacity $C$ and the sum of the heat loads:

$$C\dot{T} = Q + K(T_A - T) \qquad (1)$$

In the case when the air conditioning is running (when $T_l < T < T_h$), the differential equation is the same as Equation (1) with an additional term on the right-hand side of the cooling power of the air conditioner, $-|Q_C|$. The air conditioning includes the actual cooling unit and the components that deliver the cooling power to the location of the thermostat 30. For central air conditioning, for example, the components generally includes a fan (not shown) that distributes cold air via ductwork 35 and through registers 29 into the interior of the house 11; the ductwork 35 has a thermal connection to the outdoors, for instance, via leaks, as well as to the interior space being cooled. The thermostat 30 is generally located in a place that is likely not the coldest part of the system. In this model, the details of the thermal network of the air conditioning, ductwork, and forced convection are factored into the cooling power $Q_C$, where the cooling power $Q_C$ represents the cooling power that is experienced by the thermostat 30. Here, only sensible power is considered, as most thermostats respond only to temperature.

As with ambient temperature, any variance in $Q$ or $Q_C$ over an operational cycle is ignored in this model. To make a functioning system, the cooling power of the air conditioning at the thermostat $Q_C$ (where $Q_C > 0$) must be greater than all thermal loads at the given indoor temperature and ambient temperature.

Both $t_n$, the on-time of the operational cycle, and $t_f$, the off-time of the operational cycle, increase with heat capacity and deadband. $t_n$ increases and $t_f$ decreases with an increase in ambient temperature, an increase in the non-envelope heat load, a decrease in the thermostat set point, and an increase in thermal conductance. $t_n$ also increases with a decrease in the cooling power $Q_C$ of the air conditioner. In normal operation, the deadband and heat capacity are not expected to change often or to change significantly. The overall thermal conductance might change if there are structural changes to the house. The internal heat load $Q_{in}$ is expected to vary significantly over a day, though the variance may be small over one cycle of the air conditioner. Thermal conduction is still expected to be the dominant method of heat transfer for a house. The cooling power is expected to change as a function of indoor and ambient temperature and indoor humidity; this change is expected to be small over one operational cycle. The thermostat set point may change over a day and the ambient temperature is expected to change significantly over a day. For real systems, the deadband $T_h + T_l$ is generally expected to be on the order of 1° C; a smaller deadband could mean that the air conditioning cycles between running and going to idle or standby constantly, and a larger deadband might allow intolerable variation in the indoor temperature.

Although this model is highly simplified in considering the house as one lumped thermal mass and only the variation over a cycle of the indoor temperature is considered, the model highlights important dependencies of air conditioning usage on system parameters.

Weather is a key determinant of the variation in residential energy usage for indoor climate control. The extent to which the weather impacts a given house depends upon the effectiveness of a house's structural ability to isolate the interior from the environment via insulation to reduce conduction load, shading to reduce insolation load, and sealing to reduce infiltration load.

Assuming that the thermal energy in a house roughly balances out over a day and that the house is climate controlled to the thermostat set point by the air conditioner over the entire day, including at night when the air conditioner is still needed to maintain thermal comfort, the relationship between the time that an air conditioner is running to the thermal loads on the house throughout a day can be expressed as:

$$\int_{t_{on}} Q_C(t)dt = \int_{day} Q(t)dt \qquad (5)$$

where $t_{on}$ represents the time that the air conditioner is turned *on* and $Q(t)$ is the sum of all thermal loads, including conduction load, which may vary with time t. The cooling power $Q_C$ may be described with a bi-quadratic function of the outdoor dry bulb temperature and ambient temperature, such that, $T_{odb} = T_a$, and the indoor dry bulb temperature $T_{ewb}: Q_C = Q_C^0 f(T_{ewb}, T_{obb})$, such as described in D. Cutler et al., "Improved Modeling of Residential Air Conditioners and Heat Pumps for Energy Calculations," NREL/TP-5500-56354 (Jan. 2013). The cooling power is integrated only over the time that the air conditioner is turned *on*, while the loads are integrated over the entire day.

The cooling power and thermal load both include sensible and latent parts. However, thermostats that control an indoor climate control systems generally respond just to dry bulb temperature. The foregoing energy balance assumption fails when the weather changes a lot from one day to another day, so that the house 11 heats up beyond the thermostat set point or cools down below the thermostat set point by a net amount over 24 hours. The assumption also fails when the outdoor humidity, infiltration, or other latent loads change a lot from one day to another day, so that the indoor humidity changes a considerable net amount over 24 hours. This analysis also can fail in the case when the nighttime ambient temperature is cool enough that the indoor temperature falls below the thermostat set point of the air conditioner, and there is a net transfer of heat from the indoors to the outdoors by radiation, conduction, and convection, instead of via active cooling by the air conditioner.

The cooling power $Q_C$ may not be constant and, in general, is expected to be a function of the outdoor temperature, the indoor temperature, and humidity, as described in D. Cutler et al., cited *supra*. In many cases, this dependence can be simplified to a linear dependence on the outdoor dry bulb temperature alone, as the other terms in the more complete expression are smaller or have less variation over a day. With this simplification, the cooling power can be expressed as:

$$Q_c \sim Q_C^0 (A - B T_{odb}) \qquad (6)$$

where $A$ is a function of indoor wet bulb temperature; $B$ is a combination of the linear term of $T_{odb}$ and the term proportional to $T_{odb}T_{ewb}$; the factor $B$ then includes an assumption for $T_{ewb}$. The integral on the left-hand side of Equation (5) can be approximated as:

$$\int_{t_{on}} Q_C(t)\,dt \sim Q_C^0 A\tau - Q_C^0 B\tau \overline{T}_a^{ac} \qquad (7)$$

Here, $\tau$ is the total on-time of the air conditioner in a day and $\overline{T}_a^{ac}$ is the mean ambient temperature during the time that the air conditioner is running. Variations in $T_{ewb}$ over the day are assumed to be small variations about a mean and are ignored.

The thermal load on the right-hand side of Equation (5) can be separated into conduction, infiltration, insolation, and other loads, such that:

$$Q(t) = K\big(T_a(t) - T(t)\big) + Q_{insol} + Q_{infilt} + Q_{other}(t) \qquad (8)$$

As described *supra*, the term proportional to effective conductance $K$ can represent conduction load and all other loads that are proportional to the temperature difference between indoors and outdoors. Integrating over the day yields mean loads:

$$\int_{day} Q(t)\,dt = \tau_{day}\big[K(\overline{T}_a - T_0) + \overline{Q}_{insol} + \overline{Q}_{infilt} + \overline{Q}_{other}\big] \qquad (9)$$

where the bar notation indicates a mean over the day and $\tau_{day}$ is the total amount of time in a day. Mean indoor temperature is assumed to equal the thermostat set point $T_0$, which assumes that the ambient temperature is hot enough to require the air conditioner to operate all day and night, and that the air conditioner is large enough to always keep the temperature controlled within the small deadband.

Grouping the foregoing expressions yields:

$$Q_C^0 (A - B\overline{T}_a^{ac})\tau/\tau_{day} \sim \big(K\overline{T}_a - KT_0 + \overline{Q}_{insol} + \overline{Q}_{infilt} + \overline{Q}_{other}\big) \qquad (10)$$

If the air conditioner cycles on and off frequently throughout the day, $\overline{T}_a^{ac} \sim \overline{T}_a$. This assumption fails, for instance, if the nighttime ambient temperature is cool enough such that the air conditioner does not run. This assumption also fails if the thermostat set point is raised in the middle of the day, so that the air conditioner does not run for long periods of time. Thus, this analysis is expected to be most responsive to broad trends.

The goal is to do a regression analysis of air conditioning usage, which is the dependent variable, against weather-derived independent variables to learn about the weather-dependent loads on the air conditioner in the house. Each day of usage provides one data point for this regression analysis. There are multiple choices of the usage dependent variable, depending upon what data are available. The usage may be represented solely by the fraction of time that the air conditioning is running over a day ($\tau/\tau_{day}$). In this case, Equation (10) can be rewritten as:

$$\tau/\tau_{day} \sim \frac{K\bar{T}_a - KT_0 + \bar{Q}_{insol} + \bar{Q}_{infilt} + \bar{Q}_{other}}{Q_C^0(A - B\bar{T}_a^{ac})}. \qquad (11)$$

To do a linear regression with the fractional on-time as the dependent variable, the denominator on the right-hand side of Equation (11) must be considered in the fit. Depending on the data available, one number may be used to represent $Q_C^0$ and the temperature dependence of the denominator can be ignored, with the understanding that in the ranges of indoor temperatures and outdoor temperatures under consideration, the full temperature dependence of the right-hand side of Equation (11) is still substantially a linear relationship. The cooling power can be incorporated as a normalization of either the dependent variable, the independent variable, independent variables before the regression, or of the coefficients that result from the regression. Additionally, with assumptions based on what is known in general about indoor air conditioning systems and an assessment of the indoor wet bulb temperature, for example, using typical values for indoor humidity and effective thermostat set point, for the values of *A* (a function of indoor wet bulb temperature) and *B* (a combination of the linear term of $T_{odb}$ and the term proportional to $T_{odb}T_{ewb}$), the mean daily temperature can be used as a proxy for $\bar{T}_a^{ac}$, and the full denominator in Equation (11) can be used as a day-by-day normalization of either the dependent variable or the independent variables before the regression analysis.

The usage may also be the left-hand side of Equation (10), where the full integration over the air conditioner on-time is performed using the actual temperatures while the air conditioner is turned on, during each period of time that the air conditioner turns on during a day, via weather data that may be interpolated to match the time scale of the air conditioner cycles. In this case, $Q_C^0$ may be derived from information about the air conditioner or from the power draw of the air conditioner with information or an assumption about the COP.

The power drawn by the air conditioner *P* at some fixed temperature as derived from a fit of *P(T)* may be an appropriate approximation for the cooling power. If the temperature dependence of the cooling power is to be included, the temperature dependence may be assessed from specific information about the air conditioner, the indoor wet bulb temperature, or figures that are assumed to be typical. In each of these cases, only the times that the air conditioner turns on and off are required in the usage data, and the power draw of the system can be used as an additional piece of information to assess the cooling power. Though assessing the cooling power via the power draw of an air conditioner may lack quantitative accuracy if the COP is not known, such analysis can still provide a useful assessment of the thermal performance of a house, particularly in comparison to other houses.

The dependent variable can also be the total electrical energy used by the air conditioner over the day; in the typical case of an air conditioner run from electrical power, the total electrical energy is the total electrical energy consumption by the air conditioner over a day. For any air conditioner, the input power *P* (here, electrical power) is related to the cooling power by the coefficient of performance (COP): $P(COP) = Q_C$. Thus, the cooling power on the left-hand side of Equation (5) can be derived from time-varying electrical power if the COP and its variation in time are known. For houses in a similar climate with similar types of air conditioners, the variation in COP with ambient temperature may be similar from one system to another, and the house-to-house variation in the COP at a given temperature may reflect a smaller effect on the electrical consumption of the air conditioner than the house-to-house variations in the thermal load or overall thermal performance. The rated COP of an air conditioner might also be known from survey or audit data.

With an assumption about the COP and the temperature-variation of the COP, the left-hand side of Equation (5) can be integrated directly when the usage data indicate the times that the air conditioner is on and the power draw during those times. The dependent variable in this case is the integration over a day of $\int P(t)COP(t)dt$. Weather data, perhaps with interpolation to match the usage data, can be used to include the variation in COP due to the time-varying temperature.

Irrespective of the choice of dependent variable, the regression analysis uses independent variables that will describe the terms on the right-hand side of Equation (10). While this analysis is described using integration and averaging over a time period of one day, other time periods are possible, such as a usage time series with each point representing one week or one operational cycle of the air conditioner, instead of one day, with the generalization extending to an appropriate re-definition of $\tau$, $\tau_{day}$, time-averages and integration times. Equation (10) makes the most sense when the temperature of the house is the same at the beginning and end of every integration time period. In light of the simple thermostat model described *supra*, over one operational cycle of an air conditioner, the temperature, as measured by the thermostat, is the same at the beginning and end of the cycle. However, the thermostat's temperature reading could be different from air temperature at other points in the house and different from the temperature of any wall or piece of furniture. Thus, choosing the air conditioner operational cycle as the unit of time for the regression analysis, while possible, can be less than ideal. At shorter time scales, such as one air conditioning operational cycle, the different time delays in the house, which is a more complicated physical system than what is represented by the one thermal mass model described *supra*, may necessitate a more complicated analysis or may introduce larger errors in the analysis. Integrating over longer time scales allows more tolerance for varying time delays for the different thermal loads. Irrespective of the integration time chosen to form the usage time series from the usage data, utilizing data at a time resolution that clearly indicate when the air conditioner turns on and off allows a more complete consideration of the temperature-dependence of the air conditioner performance and time-variance of all weather-dependent loads. Thus, this analysis provides the opportunity for respecting all the physical time scales in the system.

In this analysis, loads are assessed from weather data, which may include, for example, temperature, specific humidity, wind speed, and cloud cover, recorded hourly. The goal is to do a multi-parameter regression of daily air conditioner usage against appropriate weather parameters to make an assessment among houses about the relative quality of the thermal performance of the house, including the behavioral choices of the occupants.

A useful multi-parameter regression depends on choosing the right dependent variable, having independent variables that are independent of each other, and being appropriately sensitive to outliers and to noise. Here, temperature, some measure of insolation load, and some measure of infiltration load are treated as independent variables to reflect three ways that houses can be connected to the environment. Other loads can be included in this analysis, as represented in Equation (8).

In a performing a regression of the air conditioner usage against the mean daily temperature, depending upon how cooling power is included, the coefficient of this regression is equal or proportional to thermal conductance $K$. In this case, the regression coefficient indicates the quality of the building's thermal isolation from the environment, where, in this case, thermal isolation refers specifically to the insulation of the interior of the house against thermal loads that are proportional to the temperature difference between outdoors and indoors.

Other independent variables in the regression can be used to assess the other loads described in Equation (8). The infiltration load can be written as $Q_{infilt} = ELA \cdot X_{infilt}$. In this case, a regression of energy usage against $X_{infilt}$, with the possibility of including other independent variables, is indicative of the effective leak area (ELA) of a house. The insolation load can be written as $Q_{insol} = A_{fen} \cdot X_{insol}$, where $X_{insol}$ represents the insolation load per unit area of fenestration that permits insolation into the house and $A_{fen}$ is the regression coefficient indicative of the area of exposure of the house to insolation load. The regression analysis can include any subset or combination of these independent variables, as well as independent variables that represent other loads.

If insolation load in a house is significant, a regression of energy use against $\overline{X}_{insol}$, where $\overline{X}_{insol}$ is an appropriate indication of insolation load per unit area over the time period of interest, is expected to show a regression coefficient that is indicative of the area of ineffectively-shaded windows in the house. This measure is expected to provide a useful comparison between houses; rather than giving a precise assessment of one house, the measure can be useful to assess from a group of houses, which houses are most likely to have large areas of ineffectively-shaded windows. For the same area, single-pane windows will show up as more ineffectively shaded, than double-pane or other higher-quality windows. The solar heat gain per unit area through a window is proportional to the incident radiation, with a constant of proportionality that is a function of angle of incidence integrated over wavelengths. The constant of proportionality varies, depending, for example, upon the type of glass, the number of panes, coatings on the glass, and the type of frame, such as described in the ASHRAE Handbook, cited *supra*. Energy use for air conditioning is expected to decrease with increasing cloud cover, as clouds reduce direct solar load from sunlight coming in through windows and other exposed openings.

Different choices for $\overline{X}_{insol}$ can be used, including:

- The mean cloud cover over the day during daylight hours, which is expected to yield a negative regression coefficient for air conditioner usage in a house with large areas of unshaded windows or other exposure to insolation.
- The mean calculated insolation on a surface facing a given direction over the day, where the insolation is calculated using methods detailed in the 2013 ASHRAE Handbook, cited *supra*, and the direct insolation is scaled proportional to the cloud cover. For air conditioner usage, this choice would yield a positive regression coefficient indicative of the area of unshaded windows or exposure to insolation on a surface facing a given direction.

Still other choices of $\overline{X}_{insol}$ are possible.

A multi-parameter regression makes the most sense when the input parameters are linearly independent. The choice of what parameter to use for insolation may be dependent on the degree to which temperature and insolation parameters are correlated for a given location. The choice of what insolation parameter to use or how to interpret the regression result may also depend on local weather patterns. For instance, if a city experiences more variable cloudiness in morning than in the afternoon, the insolation on an east-facing surface may be a strong parameter to use in the regression, and the result could be used to assess which houses most likely have ineffectively-shaded east-facing windows.

In the multi-parameter regression, the fractional statistical error on the insolation coefficient and the sign of the coefficient can be used to evaluate the overall significance of insolation load as part of the overall thermal load in a house. If the insolation regression coefficient is of the wrong sign than from what was expected or the insolation regression coefficient has a high fractional error, the insolation load may be assumed to not be the dominant non-conduction load in that building. Here, the fractional error is the ratio of the statistical error to the regression coefficient. The fractional error may be the standard error from the regression, a statistical error assessed by performing different regression analyses using different input variables, or some other assessment of statistical error or uncertainty in the regression coefficient.

In a multi-parameter regression including temperature and $\overline{X}_{insol}$, the ratio of the regression coefficient of $\overline{X}_{insol}$ to the regression coefficient of temperature can further provide an assessment of the importance of insolation as a source of thermal load on the house. Generally, conduction or heat gain due to the temperature difference across the building envelope is expected to be the largest source of heat gain in a house. A higher ratio of the regression coefficient of $\overline{X}_{insol}$ to the regression coefficient of temperature ($A_{fen}/K$) indicates that the insolation is a more significant cause of air conditioning usage in the house.

Air conditioners dehumidify while cooling air. When the air that an air conditioner draws in has a specific humidity, which is the mass fraction of water in the humid air, that is higher than the specific humidity of the air that the air conditioner will output, less of the air conditioner's total cooling power goes to changing the actual temperature in the house, that is, sensible cooling, and more of the total cooling power goes to condensing the water out of the air, that is, latent cooling. Since a thermostat registers only dry bulb temperature, an air conditioner taking in humid air must run longer to reduce the room temperature to the thermostat set point than an air conditioner that is taking in dry air. The on-time of the air conditioner in a single cycle $t_n$ and, thus, the total daily energy usage $E_{day}$ and daily on-time $\tau$, are expected to increase with the humidity of the air that the air conditioner draws into the system.

For this analysis, the indoor climate control system assumedly recirculates indoor air, and outdoor air is introduced via leaks through infiltration or other intentional ventilation systems. The humidity inside a house comes from many sources, including people and animals, who sweat and breathe out moist air; showers and other activities in the house that involve running water; cooking and dishwashing; and outside air that comes inside via open doors and windows and other leakage paths that vary less in time. Particularly with respect to outside air leakage, the air conditioner energy usage of a leaky house is expected to increase with outdoor humidity more than in a comparable, well-sealed house.

In an air conditioner, the temperature and humidity of the output air and thus the total cooling power vary depending on the indoor and outdoor dry bulb temperatures and the indoor specific humidity. This total cooling power is the change in the specific enthalpy between the input air and the output air times the mass flow rate of the air through the system.

For a house that is in a quasi-steady-state, introduction of humid outside air creates an additional load on the air conditioner that is related to the mass flow rate of the humid air into the house, which is assumed to replace an equal amount of the less humid air inside the house, and the enthalpy difference between the air outside the house and the air inside the house.

The flow rate of air through a given hole or opening in a house is a complicated function of the pressure difference between indoors and outdoors, as well as the shape of the hole. Temperature differences across the hole and wind at the location of the leakage determine this pressure difference. The flow rate per unit area for an entire house can be estimated as a function of $|T_a - T|$ and wind speed. The coefficient that multiplies wind speed varies with the degree to which the house is sheltered. The coefficient that multiplies the temperature difference, the stack coefficient, varies with the height of the house. Though the number of stories in a house can be considered information that is available to a utility, the shelter class may be unknown. Moreover, the actual indoor temperature needs to be estimated, if not otherwise known. Estimation methods include using the effective thermostat set point, such as described in commonly-assigned U.S. Patent application, Serial No. 14/228,207, cited *supra*; using an effective thermostat set point plus an offset; measurement via a smart thermostat or other sensor; or guessing that the indoor temperature is close to some standard temperature.

Conventionally, the effective leak area ("ELA") is assessed by a blower door test in a house. The total air flow rate due to infiltration is equal to ELA times the infiltration forcing function $s$: $\dot{M} = \rho s\text{ELA}$, where $\rho$ is the density of air and the forcing function is a function of wind speed or temperature, as described *supra*.

For this analysis, the extra load introduced by infiltration is of significance and the infiltration load $X_{infilt}$ per unit ELA is related to the difference in the specific enthalpy of outdoor air $h_o$ and indoor air $h_i$, such that:

$$X_{infilt} = (h_o - h_i)\rho * s \qquad (12)$$

Equation (12) represents a combination of latent and sensible load to the extent that outdoor air is more humid than indoor air. To accurately calculate this load over time requires knowing outdoor dry bulb temperature and specific humidity, indoor dry bulb temperature and specific humidity, and all the parameters needed to calculate $s$ and ELA. For analyzing smart meter data, the indoor temperature can be estimated using the effective thermostat set point, such as described in commonly-assigned U.S. Patent application, Serial No. 14/228,207, cited *supra*; using an effective thermostat set point plus an offset; measurement via a smart thermostat or other sensor; or guessing that the indoor temperature is close to some standard temperature. The indoor specific humidity likely varies over time for leaky houses in climates with variable outdoor humidity. The enthalpy difference includes several terms, some of which may be small enough to be ignored. For air conditioner usage, the latent and sensible parts of the enthalpy difference are relevant. For heating usage, only the sensible part of the enthalpy difference in Equation (12) is relevant and the infiltration load can be assessed using the forcing function and the sensible enthalpy difference.

The difference in enthalpy necessarily includes a term that is proportional to the temperature difference between indoors and outdoors (the sensible load). To better choose independent variable in the analysis, in a multi-parameter regression analysis where ambient temperature is one independent variable and air conditioner usage is considered, the integration of an enthalpy difference times a forcing function as in Equation (12) may not be the best choice for a second independent variable $X_{infilt}$. There are other choices that make sense in the case of air conditioner usage, where infiltration introduces a latent load, as well as a sensible load. One choice is $X_{infilt} = sW_0$, where $W_o$ is the ambient specific humidity. Integration thus provides an assessment of the total water mass added to the house due to infiltration per unit ELA over the day. The specific humidity outdoors could also be used as $X_{infilt}$. In either case, $X_{infilt}$ can be taken to be zero when the humidity falls below a certain level, such as what is assumed to be the indoor humidity or what is assumed to be the specific humidity of the output air of the air conditioner. If the outside and indoor air have specific humidities that are lower than the output air of the air conditioner, infiltration will cause no excess latent load. If the ambient humidity is less than the indoor humidity, such as in a desert climate, and indoor humidity still demands some latent cooling from the air conditioner, then infiltration may decrease the load on the air conditioner.

Absent manual system cutoff at the thermostat 30 by the occupant of the house 10 or others, the duration of the running time of an air conditioner depends upon its cooling power, the sum of the loads on the system, the thermal properties of the building, and the size of the deadband. In addition, the specific dependence of the load on the air conditioning on weather parameters can be compared across houses, for example, by doing a regression analysis of the air conditioner usage to encompass the various choices of independent and dependent variables discussed *supra*. Houses that are leakier than other houses are expected to show a higher dependence of air conditioning usage on the measure of infiltration load as driven by wind and temperature.

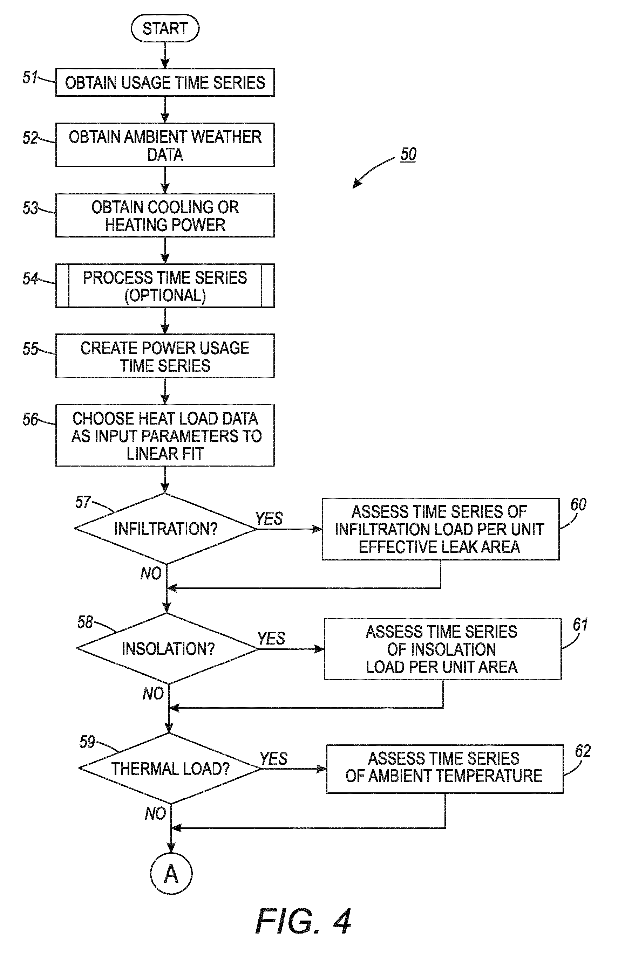

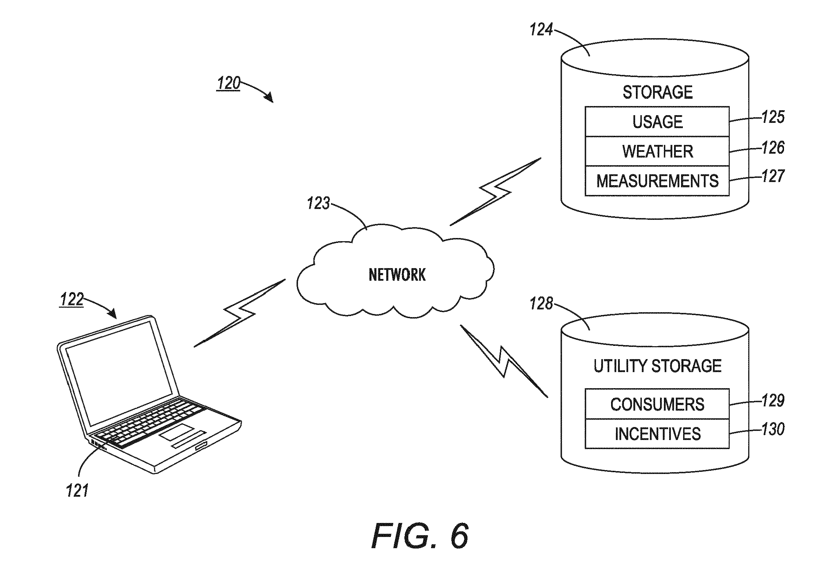

A regression analysis of air conditioning (or heating) usage can be performed against weather-derived independent variables to evaluate the significance of heat loads on a house with respect to energy consumption. FIGURE 4 is a flow diagram showing a computer-implemented method 50 for externally assessing susceptibility of a building to heat loads, in accordance with one embodiment. The dependent variable is usage of the indoor climate control system and the independent variables can include the heat loads from infiltration, insolation, and temperature. Other independent variables in addition to or in combination with the foregoing heat loads are possible. The method is performed as a series of process or method steps performed by, for instance, a general purpose programmed computer, such as further described *infra* with reference to FIGURE 6.

In a multi-parameter regression including temperature and $\overline{X}_{infilt}$, the ratio of the regression coefficient of $\overline{X}_{infilt}$ to the regression coefficient of temperature can further provide an assessment of the importance of infiltration as a source of thermal load on the house. Generally, conduction or heat gain due to the temperature difference across the building envelope is expected to be the largest source of heat gain in a house. A higher ratio of the regression coefficient of $\overline{X}_{infilt}$ to the regression coefficient on temperature ($ELA/K$) indicates that the infiltration is a more significant cause of air conditioning usage in the house.

To varying degrees, the indoor climate control system of a building is subjected to multiple heat loads throughout the day, whether from infiltration, insolation, or thermal conduction. Consider first the problem of infiltration. Outdoor air forced into a house via wind- and temperature-driven pressure differences creates a load on indoor climate control due to the temperature difference between indoor and outdoor air and, in the case of air conditioning, the humidity difference. Outdoor air enters a home through unintentional leaks, such as around poorly-sealed doors and windows, and through larger openings that occupants may create, such as open doors and windows.

Consider next the problem of insolation on the house, particularly insolation that passes through clear fenestration, which can include windows, skylights, glazing, and other surfaces that can transmit those parts of the solar spectrum that will heat the interior of a house. Direct insolation load via fenestration can increase energy usage for air conditioning and decrease energy usage for heating and lighting. Houses that have lots of exposure to insolation, such as through unshaded, clear fenestration, will show a higher dependence of air conditioning runtime on cloud cover or other factors that modulate insolation.

Consider last the problem of thermal conduction. In houses, conduction load is typically the largest thermal load. The conduction load is the energy that enters a house via thermal conduction through the building envelope from the hot outdoors to the cooler indoors. Houses with poor thermal insulation have a high conduction load and are thus poorly isolated from the outdoor temperature.

Here, only a limited set of information about a building is needed to externally evaluate the significance of a given heat load on the indoor climate control system. A time series of indoor climate control system usage, which reflects usage of the system in the building over several operational cycles, is first obtained (step 51). Next, ambient weather data is obtained for the same operational cycles as the usage time series (step 52). As well, a measure of the cooling or heating power of the indoor climate control system, as applicable, is obtained (step 53). The data in the usage time series can be expressed as binary indications of whether the indoor climate control system is running or at idle at any given time. In a further embodiment, some measure of the cooling power of an air conditioner or the heating power of a heating system, as a function of time, or total energy used by the system over each day, can be used, instead of or in addition to the system's usage, as reflected by the on-time. Cooling (or heating) power can be, for instance, from manufacturer information, information provided by building owner or occupant about the indoor climate control system, or assessment of cooling (or heating) power based on the electrical power draw or fuel usage of the indoor climate control system and other assumptions. Preferably, the ambient weather data includes enough information for study over a long enough period of time to include the natural variations in ambient temperature, humidity, and other important weather parameters, and in indoor climate control system running conditions, as needed to make a sound analysis. The cooling (or heating) power can be estimated either from knowledge of the specifications of the components of the indoor climate control system installed in the house, or from the drawn electric power of the system, as obtained from power consumption derived from the usage time series. The power draw or fuel usage at a fixed temperature can also be extracted from a power usage time series, as further described *infra*, as an indication of the cooling (or heating) power.

The usage time series data can be processed in operating cycles with each operating cycle characterized by a duty cycle. For each operating cycle, a duty cycle is the ratio of the time that the system is running to the total time of the operating cycle. An operating cycle is defined as a window of time during which the indoor climate control system undergoes two discrete state transitions, a "go-to-idle" state transition during which the system transitions from a running state to an at idle or on standby state, and a "go-to-run" state transition during which the indoor climate control system transitions from an at idle or on standby state to a running state. The indoor climate control system runs for a period of time between each "go-to-run" state transition and the next "go-to-idle" state transition, and the indoor climate control system remains at idle or on standby for a period of idle time between each "go-to-idle" state transition and the next "go-to-run" state transition. The system runs for the time necessary to bring the building's interior temperature into a temperature range defined about or around a desired indoor temperature for the building, as indicated by a thermostat or other control mechanism. In defining operating cycles, the window of time can be shifted forward or backward, such that an operating cycle begins while the system is running, then transitions to at idle or on standby, and subsequently starts running again, or while the system is at idle or on standby, transitions to running, and subsequently goes to idle or on standby again, so long as the shifting of the window of time is consistent for all operating cycles.

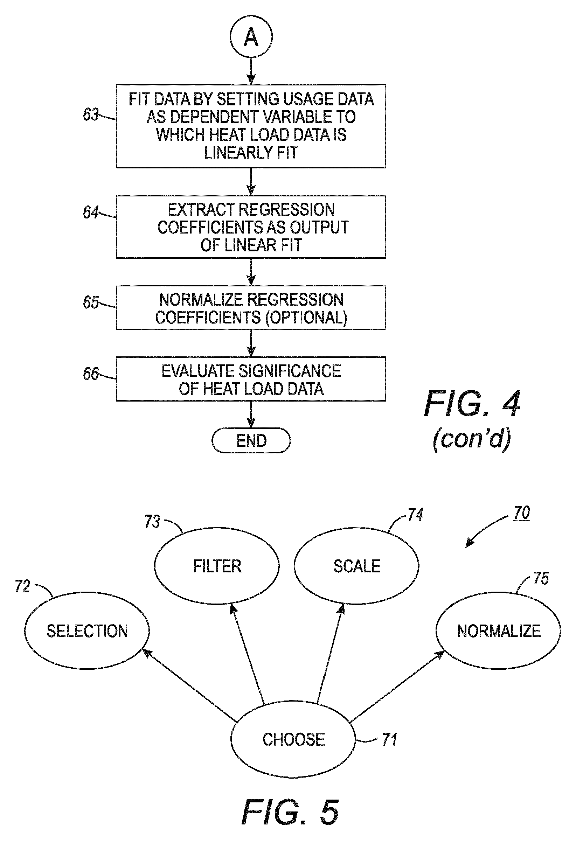

Either or both of the usage time series and the ambient weather data time series, as explained *infra*, can be processed (step 54) prior to performing the fit. FIGURE 5 is a flow diagram showing a routine 70 for processing time series data for use in the method 50 of FIGURE 4. One or more operations on the time series data are chosen (step 71). A subset of the time series data may be selected (step 72), and, as needed, only the ambient weather data that were assigned to the selected time series data are also retained. For instance, operating cycles for only select hours days, weeks, months, times of the year, or time periods in the usage time series may be retained, which can be useful, for example, when there is interest in studying operation outside of the hottest days of the year or when considering operation during times when there is no indication of sharp changes in the system load due, for instance, to changes in thermostat set point. In particular, the data in the usage time series for the days when an air conditioner has run for more than a certain amount of total time may be selectively retained to ensure that the time periods being considered are times when the temperature of the house is actively controlled by the air conditioner. Data may be selected, for example, to consider only non-holiday weekdays separate from weekends. Other selections or combinations of selections of time series data are possible.

The time series data can also be filtered (step 73), particularly when usage data are at a time resolution appropriate to the physical time scales of the indoor climate control system. In addition, the time series data can also be divided into multiple spans of time and, if desired, a different filter can be selected for each time span. One or more filters can be applied to the time series, such as an exponential filter, a moving average filter, a weighting moving average filter, a low pass filter, a band pass filter, and a noise smoothing filter. For instance, the usage time series can be filtered with an exponential filter to reflect the physical time scale of the house. The time constant of the filter can be adjusted based upon information about the type, size, location, height, construction, or shelter class of house. The time constant may also be adjusted to improve the statistical analysis. The time constant may further be chosen as a value that is considered typical for houses of a certain type or may be chosen to be either much smaller or much larger than is considered to be typical, to reduce bias when the exact time constant is unknown. Other filtering or combinations of filtering of time series data are possible.

Further, the time series data can be scaled (step 74) by some factor, as discussed *supra* with reference to the explanation of dependent variables. For example, as the cooling power of an air conditioner is expected to change with ambient temperature, the usage time series data could be scaled by a function of the ambient temperature at an appropriate time to account for this physical effect. Other scaling or combinations of scaling of time series data are possible.

As indoor climate control usage is expected to increase for larger buildings, time series data may be scaled by a factor related to the size of house.

Optionally, the time series data can be normalized by the measure of the cooling or heating power of the indoor climate control system (step 75). For instance, the measure of the cooling or heating power can be incorporated into the calculation of the usage time series, or the usage time series or the ambient weather data time series can be normalized by the measure of the cooling or heating power. Other normalizations or combinations of normalizations of time series data are possible.

Referring back to FIGURE 4, following any processing, a power usage time series may optionally be created (step 55) by extrapolating the power usage over the temperature time series. The power usage time series is an integral of a product of the usage time series and a function of the ambient temperature data in the temperature time series. The power usage data in the power usage time series is a dependent variable to the linear fit. Data for heat loads are chosen as input regression parameters to the linear fit (step 56). The heat loads are the independent variables and can include one or more of infiltration (step 57), insolation (step 58), and temperature-driven thermal load (step 59), including conduction load. Other input regression parameters are possible, including lagged variables, such as the mean temperature from the day, cycle, or hour respectively before the current day, cycle or hour, which can be one way of accounting for the different physical time scales in the system. There may be categorical variables to account for weekdays as distinct from weekends. Any of the input load variables may be defined to be distinct from zero only in the case where they represent a positive load on indoor climate control; for example, in the case of air conditioning, an independent variable may be the temperature difference between indoors and outdoors, and this variable may be set to zero when the outdoor temperature is less than the indoor temperature to indicate that there is no temperature-driven load on the air conditioner in this case. Similarly, $X_{insol}$, whether indicated by cloud cover or a calculation of insolation, may be taken to be zero outside of daylight hours.

For a heat load due to infiltration (step 60), a time series of the infiltration load per unit effective leak area of the building on the indoor climate control system is assessed (step 60) from temperature, wind, ambient humidity, or other weather conditions, as measured over the same time periods as the usage time series. This infiltration load per unit effective leak area is an indication of how much more an indoor climate control system must work due to air that enters the house from outside. In a further embodiment, the infiltration load can be assessed as a function of a presumed infiltration flow rate per unit effective leak area for the building as calculated based on ambient temperature, ambient wind speed, and the building's number of stories or shelter class, such as described in the 2013 ASHRAE Handbook, cited *supra*. In a still further embodiment, an enthalpy difference, as derived from the ambient weather conditions over the time periods, is assessed. The enthalpy difference includes the difference between indoor air temperature and indoor humidity, and between ambient temperature and ambient humidity, over the time periods. The infiltration load is determined as a function of the enthalpy difference as appropriate to heating or cooling. In an even further embodiment, a total water infiltration amount per unit effective leak area, as derived from the ambient weather conditions over the time periods, is assessed. The infiltration load is assessed as a humidity latent load determined as a function of the measured total water infiltration amount per unit effective leak area over the time periods. Still other ways of finding the infiltration load are possible.

For a heat load due to insolation (step 58), a time series of the insolation load on the building from weather conditions that affect insolation is assessed (step 61), as measured over the same time periods. The insolation load could be based on time, location, or weather data, or the insolation on the house could simply be directly measured. The insolation load could also be determined as a function of daily mean temperature, cloud cover, and other weather parameters. Assessing the insolation load requires assumptions about the surface upon which the sun is shining, for example an east-facing, south-facing, or horizontal surface. The total insolation on a top-facing or south-facing surface is expected to have a strong correlation to the ambient temperature since the same insolation heats the ambient environment on a given day, and a multi-parameter regression that includes as independent variables both temperature and insolation on a top-facing or south-facing surface may be weak because these variables are not physically independent of each other. Regression against insolation only on surfaces that face a particular direction, such as on an east-facing or west-facing window, can provide an independent variable that is less directly related to the mean daily ambient temperature. The insolation load can be calculated using solar models, location-specific assumptions about optical depth of the atmosphere, and time-series data for cloud cover, such as described in the ASHRAE Handbook, cited *supra*. The direct insolation is assumed to be reduced by the fraction of cloud cover indicated in the ambient weather data, as well as data about ambient atmospheric conditions. Other sources and derivations of insolation load are possible.

In a further embodiment, instead of calculating the heat load due to insolation, the dependence of air conditioning usage on insolation can also be determined by using cloud cover as an independent variable, so that $Q_{insol} \sim A_{fen} \cdot X_{insol}$, where $X_{insol}$ is an indication of the cloud cover over a period of time. In this case, $Q_{insol}$ is an representation of the daily variance in insolation load for the purposes of a clear regression analysis, rather than a quantitative indication of an actual insolation load. For example, even though a cloudy day on August 1st in Austin, Texas may be cooler than a sunny day on August 1st in Austin, Texas, the cloud cover can equally vary from clear to fully clouded, both on August 1st and on December 1st. Cloud cover, which modulates the daily insolation, may thus be less directly related to daily temperature than any assessment of insolation, and may therefore provide a stronger indication in a regression of how much air conditioning usage depends upon insolation, separate from temperature.

For a heat load due to overall temperature-driven thermal load (step 59), including conduction, a time series specifically of ambient temperature $T_A$ for the same operating cycles as the usage time series is assessed (step 62). The ambient temperature time series can be processed prior to performing the fit, as further described *supra* with reference to FIGURE 5. The difference between ambient temperature and the indoor temperature can equally be used as the independent variable.

A linear fit of the power usage time series and the heat load data time series is performed (step 63). The time series of the infiltration load per unit effective leak area of the building, the time series of the insolation load on the building from weather conditions that affect insolation, and the time series of ambient temperature $T_A$ can be used as the independent variables. Other independent variables are also possible, including wind speed, barometric pressure, and other weather parameters or functions of weather parameters; other assessments of loads, such as heating due to plug loads or occupancy; and other expressions, as discussed in detail *supra*. The dependent variable can be the fraction of a period of time that the air conditioner is on (fractional on-time) or, in further embodiments, total energy usage over a fixed period of time, such as a day or a week; or an integrated function of temperature and power draw to represent $\int_{t_{on}} P(t) COP(t)\, dt = \int_{day} Q(t) dt$, where $P(t) COP(t)$ is for inclusion of how COP varies with temperature $T$, which in turn varies over time $t$. Other forms of the dependent variable drawn from the usage time series and possibly incorporating an assessment of the cooling or heating power of the indoor climate control system are possible.

The regression coefficients of the linear fit are extracted as outputs (step 64). For infiltration, a large positive regression coefficient of the infiltration load with minimal error on the coefficient is interpreted as an indication of significant infiltration load into and ineffective sealing of the building, including where an occupant leaves open a window. The regression could also be performed against the mean specific humidity or against the total or mean infiltration load per unit ELA calculated over the day using measured wind speed and temperature.

For insolation, a large positive regression coefficient of the insolation load with minimal error for cooling and a large negative regression coefficient of the insolation load with minimal error for heating are interpreted as indications of significant heat load due to insolation on the building. If cloud cover, rather than insolation load, is used as the insolation variable $X_{insol}$, the signs will be reversed; a large negative regression coefficient on the cloud cover with minimal error for cooling are interpreted as an indication of a significant heat load due to insolation in the case of air conditioning. In addition, a regression against cloud cover in the morning hours can be interpreted as an assessment of the quality of east-facing and south-facing windows or other exposure to insolation. The regression may include separate and multiple independent variables for assessment of exposures to insolation facing different directions, such as an insolation load on east-facing surfaces used to assess unshaded windows on the east side of a house and an insolation load on west-facing surfaces used to assess unshaded windows on the west side of a house. Still other independent and dependent regression parameters are possible. While the insolation most directly enters a house through clear fenestration, such as windows, insolation on any unshaded part of the envelope of a house can become heat load in the interior of the home. Depending on factors, including the time scale used in the analysis, the insolation coefficient may be interpreted as an assessment of the quality or degree of unshaded fenestration or as an assessment of overall unshaded exposure of the building envelope to insolation.

For overall temperature load, a regression analysis of the usage of the indoor climate control system against the ambient temperature gives an indication of the bulk thermal conductance between indoors and outdoors. A high bulk thermal conductance indicates that a house is poorly isolated from the environment. In addition to conduction load, infiltration load can create a sensible thermal load on a house that varies with temperature, though with a different time delay than direct conduction load and with different time-variance due to variance in the wind- and temperature-driven forcing function. In a regression analysis, the susceptibility of some houses to infiltration may be incorporated into the temperature coefficient if there is not a truly independent variable that described the sensible part of the infiltration load. In newer construction or in construction that meets building codes with high standards for envelope sealing, the sensible load due to infiltration can be assumed to be much smaller than the sensible load due to conduction.

Optionally, the regression coefficients can be normalized by the measure of the cooling or heating power (step 65). For instance, the regression coefficient of the infiltration load and error on the coefficient can be normalized proportional to the cooling power measure of the house. For reasons such as comparison from house-to-house or to extract coefficients that have the right dimensions to indicate physical parameters of the house, each regression coefficient and its accompanying error may also be normalized by an indication of the size of the home or some other factor.

Finally, significance of the heat load data on the indoor climate control system is evaluated (step 66). For infiltration, a building's overall ventilation and sealing quality can be evaluated during two different periods of time to assess changes to the building envelope performance and occupant behavior. The infiltration coefficient can also be used to show which buildings among a group of buildings have larger or smaller effective leak areas to make a qualitative comparison based on an indirect measurement. Thus, infiltration metrics for a number of houses can be determined by linear regressions. The analysis may be used to make a qualitative comparison between buildings of ELA or of a normalized leakage, where, for example, building size or shelter class is taken into account in evaluation of the regression coefficient.

With other loads and natural day-to-day variations, the regression coefficient related to infiltration load can be noisy and may be of varying sign. Here, the analysis is focused on comparing comparable regression results in which the infiltration coefficient is of an expected (positive) sign with minimal error. When infiltration load is assessed via a humidity latent load for air conditioning, the analysis makes sense for a humid climate where the outdoor air generally has a higher specific humidity than the indoor air. In an extremely dry climate, the indoor air, due to people, animals, cooking, and washing, may have a higher specific humidity than the outdoor air. In this case, infiltration could decrease the latent load on the air conditioner, even if the infiltration increases the sensible load. In such a climate, an assessment of infiltration via the latent load from outdoor humidity may be more challenging.

For insolation, a building's fenestration can be evaluated in terms of how much thermal radiation is passed on from the insolation load. Shading windows, for instance, via trees or by using appropriate indoor window coverings, can impact energy usage, as well as the degree of shading, the type of window shaded, and even the type of shading since some indoor window treatments can actually still emit a lot of thermal radiation. In addition, a building's overall exposure to insolation can be evaluated during two different periods of time to evaluate the impact of changes from one period of time to another.

During a heating season, unshaded windows can provide thermal gain that reduces energy consumption for heat. In a further embodiment, a similar analysis as described *supra* for insolation load on air conditioning usage could be applied to heating to indicate which windows in a house are too shaded during the heating season. As well, a comparison of indoor climate control system usage during heating and cooling seasons could provide a more sophisticated assessment of a house's exposure to insolation.

The regression coefficient related to heat load due to insolation can also be used to show which buildings among a group of buildings have larger or smaller exposures to insolation to make a qualitative comparison based on an indirect measurement. Thus, insolation metrics for a number of houses can be determined by linear regressions, including regressions of insolation loads and ambient temperature time series data over the same time periods. The regression coefficient of the usage as a function of the insolation load, summed on a daily basis, can be compared across the buildings with normalization to account for cooling power of the air conditioner in each building. The regression coefficient will be higher for buildings with larger amounts of exposed fenestration or other exposure to insolation. The regression coefficients are compared qualitatively across houses, and the houses with larger positive coefficients and less statistical uncertainty on the fit are assumed to have larger insolation loads due to exposure to insolation than other houses. For example, a power utility trying to compare across a group of houses could choose for study the houses with insolation coefficients greater than zero with fractional statistical uncertainty of less than fifty-percent.

After determining which houses are most likely to have indoor climate control system usage significantly impacted by insolation load via exposed fenestration, a power utility can offer to the houses with the largest insolation coefficients indicating the most exposed fenestration incentives for changing behavior, for instance, closing window shades, or making structural changes to the house or environs to increase shading in the summer or decrease shading in the winter. The same tool that is used for identifying these houses can be used to evaluate the impact of such energy efficiency programs after the fact.

One type of evaluation of house is with respect to providing energy consumption reduction incentives. A power utility can select a group of houses to receive incentives related to reducing infiltration, such as by selecting those houses with positive infiltration coefficients and small fractional error on the infiltration coefficients as houses where infiltration is a significant determinant of energy usage. Of this group, the power utility can select the houses that have the highest infiltration coefficients as the houses most likely to benefit a large amount from infiltration reduction and offer those houses incentives for remediating the infiltration, including detailed audits or thermal imaging to find the sources of leaks, weather stripping added to doors, or proper maintenance of flues and chimneys. After offering such incentives, the same regression analysis used to identify the targeted houses could be used to evaluate the effectiveness of the energy efficiency programs.

An appropriate type of incentive can also be chosen with respect to incenting a consumer to make changes in behavior, such as consistently closing windows or doors. As before, the effectiveness of the change in behavior, and therefore the effectiveness of the incentive, can be weighed by re-determining the infiltration metrics, and comparing "before" and "after" adjustment patterns.

In a broader sense, the infiltration metrics can be used to distinguish among a group of utility consumers, and, if appropriate, determine which ones should be targeted for certain interactions. If a power utility is offering rebates, incentives, or education to the owner, occupant, or responsible party of a house related to changes in structure or behavior, those opportunities might be offered first to those consumers whose houses appear to be ineffectively sealed.

For example, usage data for the indoor climate control systems of the group could be obtained and compared. A consumer within the group that uses a lot of energy for air conditioning can be evaluated to assess whether poor quality sealing or ventilation are at fault. Comparisons can be made based on indirect information, and based on these comparisons, a power utility is better able to target rebate and incentive programs. A power utility can also monitor the impacts of energy efficiency programs. The comparison can be used, for instance, to better understand why one or more of the buildings use more energy for indoor climate control than other buildings and to help narrow the set of likely reasons for excessive energy consumption.

The power utility can also use the comparison of infiltration metrics to choose which recommendations to make to building owners, occupants, or managers for reducing energy consumption. In addition, the findings can be used by third parties who want to advertise or offer products and services for reducing energy consumption or optimizing or changing indoor climate control to building owners, occupants, managers, or responsible parties. For example, a company that provides weatherization services might want to target those consumers with the highest degree of inferred infiltration load per unit area. Other uses of the comparison are possible.

For temperature-driven load, a building's thermal isolation can be evaluated during two different periods of time, such as from year to year, to assess if significant changes have been made. The temperature coefficient can be used to compare the thermal isolation of a building among a group of buildings to make a qualitative comparison based on an indirect measurement. Comparing the regression coefficient across houses gives a comparison of the relative thermal isolation of the houses, and the relative comparison can be used to select outliers as the basis for helping utilities target energy efficiency incentive programs.

One type of evaluation is with respect to providing energy consumption reduction incentives. A power utility can select a group of houses to receive incentives related to reducing exposed fenestration, such as by selecting those houses with large positive cooling season insolation coefficients or large negative heating season coefficient as houses where insolation is a significant determinant of energy usage. Of this group, the power utility can select the houses that have the highest insolation coefficients as the houses most likely to benefit a large amount from shading and offer those houses incentives for remediating the exposure to insolation. After offering such incentives, the same regression analysis used to identify the targeted houses could be used to evaluate the effectiveness of the energy efficiency programs.

An appropriate type of incentive can be chosen with respect to incenting a consumer to make changes in behavior, such as pulling down window shades, or to make structural changes, such as planting trees by windows or adding window tint. As before, the effectiveness of the change in behavior or structure, and therefore the effectiveness of the incentive, can be weighed by re-determining the insolation metrics and comparing "before" and "after" adjustment patterns.

In a broader sense, the insolation metrics can be used to distinguish among a group of utility consumers, and, if appropriate, determine which ones should be targeted for certain interactions. If a power utility is offering rebates, incentives, or education to the owner, occupant, or responsible party of a house related to changes in structure or behavior, those opportunities might be offered first to those consumers whose houses appear to be extremely exposed to insolation.

For example, usage data for the indoor climate control systems of the group could be obtained and compared. A consumer within the group that uses a lot of energy for air conditioning can be evaluated to assess whether exposure to insolation via unshaded fenestration or other exposures is at fault. Comparisons can be made based on indirect information, and based on these comparisons, a power utility is better able to target rebate and incentive programs. A power utility can also monitor the impacts of energy efficiency programs. The comparison can be used, for instance, to better understand why one or more of the buildings use more energy for indoor climate control than other buildings and to help narrow the set of likely reasons for excessive energy consumption.

The power utility can also use the comparison of insolation metrics to choose which recommendations to make to building owners, occupants, or managers for reducing energy consumption. In addition, the findings can be used by third parties who want to advertise or offer products and services for reducing energy consumption or optimizing or changing indoor climate control to building owners, occupants, managers, or responsible parties. For example, companies that offer window covering installation, planting of trees, or high-quality windows might want to target those consumers with the highest degree of inferred insolation load. Other uses of the comparison are possible.

The power utility can use a comparison of multiple regression coefficients, such as insolation, infiltration, and temperature coefficients, among a group of homes to assess which load is most likely to the cause of an energy outlier's extraordinary consumption. For example, an energy outlier may have a low temperature coefficient and insignificant insolation coefficient compared to other houses and a high infiltration coefficient. In this case, the combination of the three metrics in comparison to other homes, more than the one metric alone in comparison to the other homes, indicates that the largest opportunity for reducing energy consumption for this outlier is in making changes related to infiltration.

The foregoing methodology, as described *supra* with reference to FIGURE 4, can be performed by one or more computers operating independently or over a network. FIGURE 7 is a block diagram showing a computer-implemented system 120 for externally assessing susceptibility of a building to heat load, in accordance with one embodiment. The methodology can be implemented as a computer program 122 for execution by a personal computer 121 or similar computational device, which include components conventionally found in general purpose programmable computing devices, such as a central processing unit, memory, input/output ports, network interfaces, and non-volatile storage, although other components are possible.

The personal computer 121 can either operate stand-alone or be interconnected over a network 123, which could be a local area network, enterprise network, or wide area network, including the Internet, or some combination thereof. The personal computer 121 can include a storage device (not shown) or storage 124 can be provided over the network 123. The storage is used to store the usage data 125. In addition, a power utility (not shown) may maintain a storage device 128 to track their consumers 129 and incentives 130. Other data can also be stored.

While the invention has been particularly shown and described as referenced to the embodiments thereof, those skilled in the art will understand that the foregoing and other changes in form and detail may be made therein without departing from the spirit and scope of the invention.

## Claims

1. A computer-implemented method for externally assessing susceptibility of a building to heat load from insolation, comprising the steps of:

   obtaining a usage time series that reflects usage of an indoor climate control system in a building over a plurality of operational cycles over a plurality of time periods, the running time comprising the time necessary to bring the building's interior temperature into a temperature range defined about a desired indoor temperature for the building;

   assessing an insolation parameter per unit area on the building from weather conditions that create insolation as measured over the same time periods; and

   performing a linear regression of the usage time series against the insolation parameter per unit area, wherein either a large positive regression coefficient of the insolation parameter per unit area with minimal error for cooling or a large negative regression coefficient of the insolation parameter per unit area with minimal error for heating are interpreted as indications of a significant amount of heat load due to insolation on the building, wherein the steps are performed on a suitably-programmed computer.

2. A method according to Claim 1, further comprising at least one of the steps of:

   calculating the insolation parameter based on insolation only on surfaces that face particular directions;

   adjusting the insolation parameter by the ambient cloud cover;

   adjusting the insolation parameter by data about ambient atmospheric conditions;

   using measured insolation as the insolation parameter;

   using calculated insolation based on one or more of time, location, and weather data as the insolation parameter; and

   using weather conditions comprising clouds that occlude insolation as the insolation parameter and reversing the sign of the coefficient accordingly.

3. A method according to Claim 1, further comprising the step of:

   obtaining a temperature time series for the temperature ambient to the building over the same plurality of the operating cycles over the time periods;

   obtaining power usage for the indoor climate control system over the time periods;

   creating a power usage time series as an integral of a product of the power usage and a function of the ambient temperature data in the temperature time series and; and

   performing the linear regression using the power usage time series against the insolation parameter.

**4.** A method according to Claim 1, further comprising of the steps of:

generating insolation metrics for a plurality of buildings by performing the linear regression of the usage time series against the insolation parameter of each building; and

comparing the insolation metrics of each building.

**5.** A method according to Claim 1, further comprising the steps of:

generating infiltration metrics for the plurality of buildings, for each building, comprising the steps of:

assessing an infiltration parameter per unit effective leak area of the building on the indoor climate control system from ambient weather conditions as measured over the same time periods; and

performing a linear regression of the usage time series against the infiltration parameter of each building; and

comparing the infiltration metrics of each building.

**6.** A non-transitory computer readable storage medium storing code for executing on a computer system to perform the method according to Claim 1.

**7.** A computer-implemented method for externally inferring quality of overall thermal isolation of a building, comprising the steps of:

obtaining a usage time series that reflects usage of an indoor climate control system in a building over a plurality of operational cycles over a plurality of time periods, the running time comprising the time necessary to bring the building's interior temperature into a temperature range defined about a desired indoor temperature for the building;

obtaining a temperature time series for the temperature ambient to the building over the same plurality of the operating cycles over the time periods; and

performing a linear regression of the usage time series against the temperature time series, wherein the regression coefficient of the temperature time series is interpreted as an indication of bulk thermal conductance through the building's envelope,

wherein the steps are performed on a suitably-programmed computer.

**8.** A method according to Claim 7, further comprising the step of:

introducing a change-point in the linear regression at which the indoor climate control system transitions either from providing heating to providing cooling or from providing cooling to providing heating or from providing heating or cooling to providing neither,

wherein the sign of the regression coefficient when the indoor climate control system is providing cooling is positive and the sign of the regression coefficient when the indoor climate control system is providing heating is negative.

**9.** A method according to Claim 7, further comprising the steps of:

obtaining power usage for the indoor climate control system over the time periods for a fixed ambient temperature;

creating a power usage time series by extrapolating the power usage over the temperature time series;

fitting the power usage time series to the temperature time series, and interpolating the fit; and

extracting the power usage at a fixed temperature as the cooling power measure of the indoor climate control system.

**10.** A non-transitory computer readable storage medium storing code for executing on a computer system to perform the method according to Claim 7.

FIG. 1

FIG. 2

FIG. 3

FIG. 4

A

FIT DATA BY SETTING USAGE DATA
63 — AS DEPENDENT VARIABLE TO
WHICH HEAT LOAD DATA IS
LINEARLY FIT

EXTRACT REGRESSION
64 — COEFFICIENTS AS OUTPUT
OF LINEAR FIT

NORMALIZE REGRESSION
65 — COEFFICIENTS (OPTIONAL)

EVALUATE SIGNIFICANCE
66 — OF HEAT LOAD DATA

END

*FIG. 4*
*(con'd)*

73 FILTER    SCALE 74    _70_

72 SELECTION    NORMALIZE 75

CHOOSE — 71

*FIG. 5*

*FIG. 6*

EP 2 944 934 A2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 14228207 B
- US 14228209 B
- US 14228211 B
- US 228207 A

### Non-patent literature cited in the description

- **H. RUTKOWSKI.** Manual J Residential Load Calculation. November 2011, vol. 2
- ASHRAE Handbook, HVAC Systems and Equipment. 2012
- **D. CUTLER et al.** Improved Modeling of Residential Air Conditioners and Heat Pumps for Energy Calculations. *NREL/TP-5500-56354,* January 2013